# EUROPEAN PATENT APPLICATION

(11) **EP 3 647 402 A1**
(43) Date of publication of application: **06.05.2020**
(21) Application number: 18020569.2
(22) Date of filing: 02.11.2018
(51) Int. Cl.: C12H 6/02, C12G 3/024, C12G 3/04

(54) **CHERRY WEINBRAND AND PRODUCTION METHOD THEREOF**

(71) Applicant: R.G.C.C. Holdings AG, 6301 Zug (CH)
(72) Inventor: Papasotiriou, Ioannis, 53070 Filotas (GR)
(74) Representative: Schmitz, Joseph

(57) **Abstract**

Cherry weinbrand can be produced by alcoholic fermentation. They result from the distillation of cherries, which thrive in Western Macedonia, Greece. The spirit is unique because the cherries create a fine fruity aftertaste and spread a pleasant aroma making it suitable for every social occasion.

## Description

Cherry, any of various trees belonging to the genus *Prunus* and their edible fruits. Commercial production includes sour cherries (*Prunus cerasus*), which are frozen or canned and used in sauces and pastries, and sweet cherries (*P. avium*), which are usually consumed fresh and are the principal type preserved in true or imitation maraschino liqueur.

Three types of cherries are mainly grown for their fruit: sweet cherries, sour cherries, and, grown to a much smaller extent, the dukes, which are crosses of sweet and sour cherries. Sweet cherry trees are large and rather upright, attaining heights up to 11 metres (36 feet). The fruit is a fleshy drupe (stone fruit) that is generally heart-shaped to nearly globular, about 2 cm (1 inch) in diameter, and varies in colour from yellow through red to nearly black. The acid content of the sweet cherry is low. The higher acid content of the sour cherry produces its characteristic tart flavour. Sour cherry trees are smaller, rarely over 5 metres (16 feet) in height. The fruit is round to oblate in shape, is generally dark red in colour, and has so much acid that it is not appealing for eating fresh.

Cherries are a major source of fibers, vitamins and minerals, including potassium, calcium, vitamin A and folic acid. They are also well known for their antioxidant properties. Antioxidants are vital for health as they protect our cells from damage caused by oxidants, or free radicals. Cherries contain antioxidants known as anthocyanins and cyanidin which may have antiinflammatory effects and initial research has shown that these antioxidants could be beneficial in inflammatory conditions such as arthritis.

The uniqueness of cherry weinbrand is based on the process of cherry fermentation in contrast with other market products. Among their ingredients, they are found to contain a high sugar content of 12.82 %, making them suitable for alcoholic fermentation process.

Alcoholic fermentation is the anaerobic process of converting sugars into alcohol with the use of a fungus. Fermentation occurs in fruit containing sugars, such as grapes, cherries, etc.

The fermentation process begins with the washing, removal of seeds and disinfection of the cherries and their pulping. Disinfected and sterilized tanks are filled with the pulp and the fungus is added. The fungus used in this process is *Saccharomyces Cerevisiae Galactose.* The quantity of the fungus added is 0.8 g/L; it is diluted with a mixture of water and pulp, in equal quantities, ten times its volume. The water/pulp mixture is heated to a temperature 35-40 °C, preferably at 37 °C and the proper quantity of the fungus is added. Following the dilution of the fungus, the final mixture is cooled to room temperature and has a maximum temperature difference of 10 degrees Celsius from the pulp inside the tanks.

After reaching the appropriate temperature, the final mixture is added to the tank under continuous stirring. Due to intense CO₂ emission, the first two days, the tanks remain open, while the rest 8 days of the fermentation they are sealed, only to be opened once a day in order to be stirred, and they are re-sealed. Fermentation is achieved under anaerobic conditions, except the first 2 days, and the temperature inside the tank varies between 16 to 25 °C, while the pH of the cherry must is 3-4. During, or more commonly, after fermentation, blossoming might occur which is treated with metabisulfit salt addition in concentration 240 mg/L.

Cherry weinbrand is produced by mixing the first distillate of the cherry must and cherry must in 2:1 ratio, 76-92 °C and re-distillation of this mixture at 76-86 °C. It's an interesting and unusual product.

Cherry weinbrand contains above 36% alcohol by volume, maximum methanol concentration 200 g in 100 L alcohol and concentration in volatile compounds is greater than or equal to 125 g in 100 L alcohol.

## Claims

1. A method for making an alcoholic spirit using the fermentation process of cherries, after they are washed, removed seeds and pulped, with the addition of *Saccharomyces Cerevisiae Galactose* fungus (0.8 g/L).

2. A method according to claim 1, wherein the fungus *Saccharomyces Cerevisiae Galactose* is diluted with a mixture of water and pulp, in equal quantities, ten times its volume. The water/pulp mixture is heated to a temperature 35-40 °C, preferably at 37 °C and the proper quantity of the fungus is added. Following the dilution of the fungus, the final mixture is cooled to room temperature and has a maximum temperature difference of 10 degrees Celsius from the pulp inside the tanks. After reaching the appropriate temperature, the final mixture is added to the tank under continuous stirring.

3. A method according to claim 2, wherein the cherry must is added in sterilized tanks in which due to intense CO₂ emission, the first two days, the tanks remain open, while the rest 8 days of the fermentation, they are sealed only to be opened once a day in order to be stirred and they are re-sealed. Fermentation is achieved under anaerobic conditions, except the first 2 days, and the temperature inside the tank varies between 16 to 25 °C, while the pH of the cherry must is 3-4.

4. A method according to claim 3, wherein during or more commonly after fermentation, blossoming might occur and it is treated with addition of metabisulfit salt in concentration 240 mg/L.

5. A method of making cherry weinbrand produced by mixing the first distillate of the cherry must and cherry must in 2:1 ratio, 76-92 °C and re-distillation of this mixture at 76-86 °C.

6. An alcoholic spirit according to claim 5, contains greater than 36% alcohol by volume, maximum methanol concentration 200 g in 100 L alcohol and concentration in volatile compounds is greater than or equal to 125 g in 100 L alcohol.

7. An alcoholic spirit produced by mixing the cherry weinbrand with any other alcoholic drink for cocktail preparation.
